# EUROPEAN PATENT APPLICATION

(11) **EP 0 933 624 A1**
(43) Date of publication of application: **04.08.1999**
(21) Application number: 98300745.1
(22) Date of filing: 02.02.1998
(51) Int. Cl.: G01J 3/00

(54) **Spectrometer accessories**

(71) Applicant: PERKIN-ELMER LIMITED, Beaconsfield, Buckinghamshire HP9 1QA (GB)
(72) Inventor: Wells, Simon Adrian, Weston Turville Buckinghamshire HP22 5SL (GB); Shepherd, Sara, Banbury, Oxfordshire OX16 9YW (GB); Gosbee, David, Leighton Buzzard, Beds LU7 7QP (GB); Wood, Christopher, Tring, Herts HP23 5RE (GB); Bater, Andrew Bryan, High Wycombe, Bucks HP13 5UD (GB); Forster, Michael Dall, High Wycombe, Bucks HP15 7BZ (GB)
(74) Representative: Smith, Norman Ian

(57) **Abstract**

A spectrometer has a housing (10), a sample station (14), a source of analysing radiation for irradiating a sample in the sample station, a receiver for receiving radiation from the sample and processing means for processing signals from the receiver to provide data relating to the analysed sample. The sample station (14) is designed to receive one of a number of accessories (30). Each accessory includes a data storage medium which stores data indicative of said accessory, whereby on insertion of said accessory in the sample station (14) the processing means can access the stored data and respond thereto to cause the spectrometer to configure itself and the accessory in a manner appropriate to that accessory.

## Description

The present invention relates to spectrometers and has particular application to FT-IR spectrometers.

Spectrometers are used to analyse samples to discover for example their constituents. A spectrometer usually includes a source of radiation which is used to irradiate a sample and a receiver for receiving radiation either reflected from or transmitted by the sample. The receiver signal is analysed to produce a spectrum which then provides information relating to the sample. In an FT-IR spectrometer the radiation source is usually an infrared source and the receiver signal is subjected to Fourier Transform techniques to produce an output spectrum.

It is common in such spectrometers to provide accessories which can hold the sample in a sample station, or can be used to provide specific analysis techniques such as Attenuated Total Reflectance (ATR). When such accessories are incorporated into the spectrometer it is usually necessary to carry out some form of configuration of the system and also to inform the software operating on the processor of the spectrometer regarding the nature of the accessory being used. This can be a relatively time consuming process.

The present invention has been designed in an attempt to improve the level of automation associated with accessories used with infrared spectrometers.

According to the present invention there is provided a spectrometer having a housing, a sample station, a source of analysing radiation for directing analysing radiation towards a sample in the sample station, a receiver for receiving radiation from the sample and processing means for processing signals from the receiver to provide data relating to the analysed sample, wherein the sample station is designed to receive one of a number of accessories and each accessory includes a data storage medium which stores data indicative of said accessory, whereby on insertion of said accessory in the sample station said processing means can access said stored data and respond thereto to cause the spectrometer to configure itself and the accessory in a manner appropriate to that accessory.

Each accessory may include a baseplate which is standard for all accessories.

The baseplate may include an electrical connector which when the baseplate is located in the sample station, mates with a corresponding connector carried by the spectrometer housing.

The spectrometer housing may carry switch means which is actuated on insertion of an accessory into said sample station, software operated by said spectrometer processor being arranged to periodically poll the condition of said switch means to thereby recognise the presence of an accessory.

The sample station may include support members for supporting the baseplate.

The baseplate may carry catch means engageable with catch elements in the sample station for enabling correct location of the accessory in said station. Each catch means may include spring biased balls engageable in corresponding formations in said catch elements.

The spectrometer may be arranged to produce a record of the configuration and condition for each measurements. Thus when measurement data is analysed at a later date the condition under which the measured data were obtained can be identified.

The invention will be described now by way of example only with particular reference to the accompanying drawings. In the drawings:
Figure 1 is a perspective view of a spectrometer in accordance with the present invention,
Figure 2 is a plan view of the sample area of the spectrometer of Figure 1,
Figure 3 is a perspective view of a base plate accessory which can be employed with the spectrometer of Figure 1, and
Figure 4 illustrates the construction of a base plate catch used in the spectrometer of Figure 1, and
Figure 5 shows of screen display created on the display unit of a PC used with the spectrometer.

Referring to the drawings, the spectrometer has a housing (10) which accommodates the operative elements of the spectrometer. These include a source of infrared radiation, a detector capable of detecting infrared radiation, and data processing means for processing signals received from the detector to provide output spectral data relating to the sample under analysis. The spectrometer can also have an associated PC (not shown) which provides a user interface and which can receive the output data and carry out processing of that data to provide spectral information. The housing (10) includes two forwardly projecting limbs (11 and 12) which define therebetween a sample station (14).

The inner side wall of each limb includes a window (15) through which the analysing radiation can pass. In use a sample is located in the sample station (14) and analysing radiation from the radiation source passes through one of the windows (15), impinges on the sample and then passes through the other window (15) on the opposite limb to the detector.

Each limb towards a lower part thereof carries a guide rail (17, 18) which extend longitudinally along one side of the sample station. Carried alongside the left hand guide rail (17) are two longitudinally spaced supports (19 and 20) and carried alongside the right hand guide rail (18) is a single support (21) which is disposed at a position opposite to the mid point of the supporting (19, 20). The supports (19, 20, 21) in use can be used to support an accessory located in the sample station. The limbs (11 and 12) also carry catch supports (22) which in use engage with corresponding catches on an accessory to retain an accessory in the correction position within the sample station. Each catch support includes formations which can receive spring biased balls on the catch elements carried by the accessory.

A lid or cover (24) may be provided which can be located in position over the sample station when a measurement is taken. The lid or cover can be clipped or pivoted at (25)

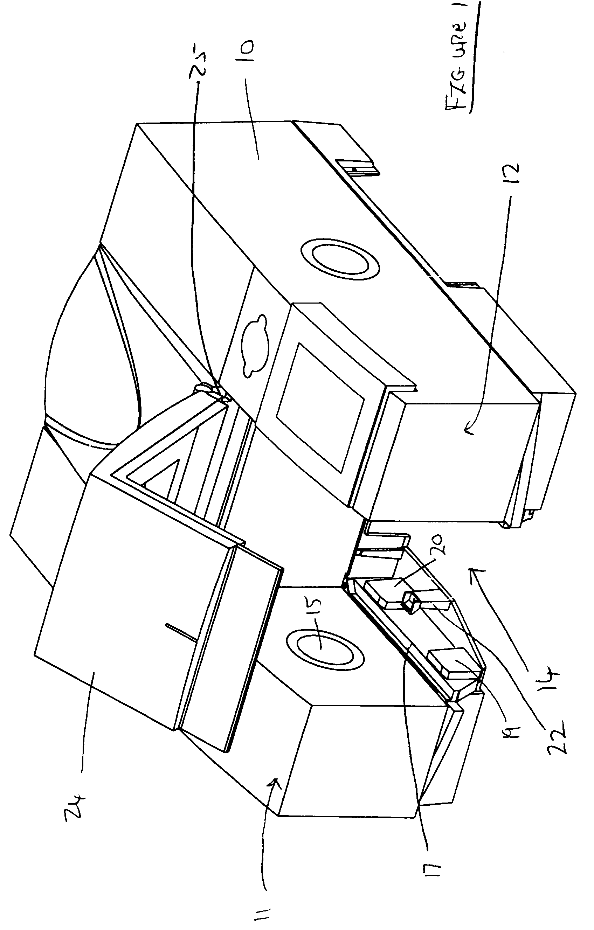

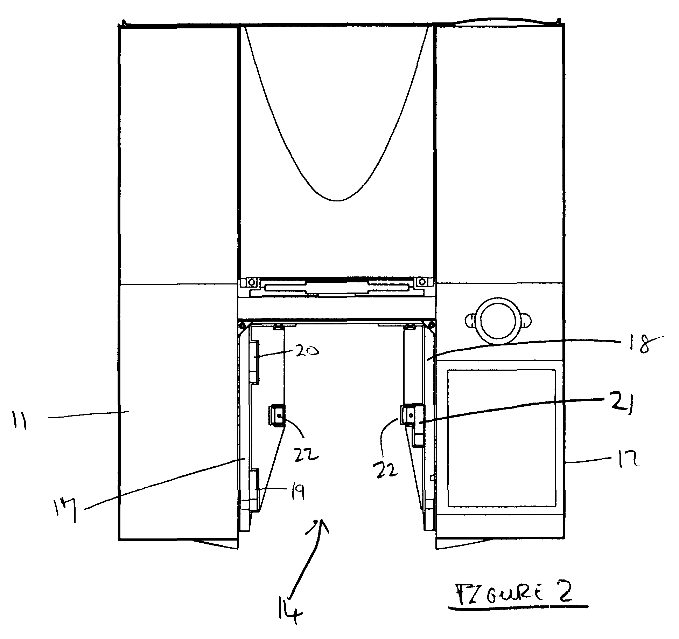

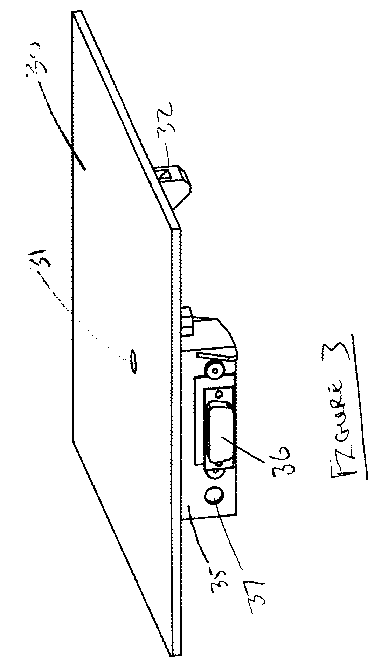

Figure 3 shows an example of a standard base plate on which a sample accessory will be carried. The baseplate is standard for all accessories. The base plate includes a support plate element (30) having a centrally located hole (31) which can be used to supply purge gas to the sample area during a measurement. Opposite lateral portions of the underside of the support plate (30) carry ball spring catches (32). Each ball spring catch includes spring biased balls which when the base plate is located in the sample station, engage with the formations on catch supports (22).

The underside of the plate element (30) has three rubber feet (not shown) which in use sit on the supports (19, 20, 21).

The plate also carries on its underside an electrical connector housing (35). The housing (35) includes a D-type electrical connector (36) which is connected to a memory element which is located in the housing (35) and can store data indicative of the accessory carried on the baseplate. The data stored in the memory is a complete characterisation of the accessory with which it is associated. This can include, for example, data relating to a top plate when that exists. When the base plate is inserted into the sample station the connector (36) engages with a corresponding connection element on the main spectrometer housing to thereby enable the processor of the spectrometer to access the memory element of the accessory by way of the spectrometer bus. Additionally, insertion of the base plate actuates a microswitch (not shown). In one example the connector on the housing is a Positronic 15-way D-type socket and the mating part carried by the accessory baseplate is a Positronic 15-way D-type plug. The socket has prongs that ensure that the connectors mate correctly and the plug has a corresponding float mount.

If the accessory is one which can be used to carry out HATR or DATR where there is a choice of sampling elements (or top plate) the memory is connected via an intermediate control board to the D-type electrical connector.

A purge hole (37) is disposed alongside the connector (36). When the baseplate is located in the sample station the purge hole (37) locates against a neoprene connector on the spectrometer housing (10). Gas can then travel through the hole (37) and up through the hole (31) into the sample space.

The memory elements can be either DS 1982 or DS 2502 devices manufactured by Dallas Semiconductors. These are 1 kbit serial EPROMs which can be accessed via a 1 wire interface. They can store 128 bytes of which 3 bytes is used for what is known as universal data packet (UDP). When a C convention is used to terminate a string with a zero, this means that the memory can provide a 124 character string. The stored information is formatted as a single UDP containing a null terminated string. Within the string data is divided into tagged fields. A field consists of a tag and associated data. The tag is delimited with the colon character and the data with a semicolon character. Tags can be given particular meanings as shown in the following example.

| Tag | Meaning |
|---|---|
| "0:" | Manufacturer |
| "1:" | Manufacturer's part number |
| "2:" | Description |
| "3:" | Serial number |

An example of a data string which can be stored in the memory is as follows:
"0:Perkin Elmer;1: L120 0323;2: Coated ZnSe HATR 45deg with Clamp;3:09876;"

It will be seen that this data describes the nature of the accessory and not the way in which the spectrometer needs to be set up to operate with it. The spectrometer processor can read this data and then respond according to software held within the processor to configure the instrument appropriately.

The operation of the spectrometer will now be described as follows. This description relates principally to the mounting of the accessory in the sample station and the way in which the spectrometer operates in response to that mounting. The way in which the spectrometer subsequently carries out an analysis of a sample in the sample station will not be described since it is not at the heart of the present invention and in general terms will be apparent to those skilled in the art.

The first step is to mount the accessory and its base plate within the sample station. The accessory is moved into the sample station so that it becomes supported on the supports (19, 20, 21) and so that the ball spring catches (32) carried by the accessory are engaged with the corresponding catch supports (22) on the housing (10). Movement of the accessory into the sample station (14) is guided by the guide rails (17, 18). When the accessory is properly mounted in the sample station the D-type connector element (36) engages with the mating connector element carried by the housing (10) thereby establishing a connection between the memory in the housing (35) and the processor of the spectrometer. Also the microswitch referred to above has been actuated by the insertion of the accessory.

The software operated by the processor of the spectrometer then carries out the following functions. It is designed to periodically poll the microswitch and recognise a change in condition of its contacts when an accessory has been inserted as described above. Once the software has recognised that an accessory has been inserted, the next step is to identify that accessory. The software reads the contents of the memory in the accessory in order to achieve this. It should be appreciated that in some instances the only information stored in the memory relates to details of the accessory type. Other accessories may include a local processor and in this instance the accessory type can be read from the local processor.

Once the software has identified the accessory type it initiates a procedure to configure the accessory if that is appropriate for the accessory type. The configuration process will depend upon accessory type. In for example the case of a horizontal attenuated total reflectance (HATR) type accessory, the configuration will depend upon the top plate and unless the top plate is in place the accessory cannot be fully configured. In this instance some configuration items may be reported as unknown.

As referred to above, the spectrometer is typically used with an associated PC and the instrument control object in the PC software is designed to continuously poll the instrument so that the complete contents of the memory in the accessory can be read into the instrument control object. An accessory change event is transmitted by the instrument control object to the instrument control application with appropriate accessory and accessory configuration data.

When the accessory has been fully configured that is to say in the case of a horizontal attenuated total reflectance (HATR) type accessory the top plate is in position, the instrument control application updates the instrument software with data from an associated accessory instrument set up file. The associated accessory instrument set up file can be configured by the user of the spectrometer, but will often have been predefined by the manufacturer of the instrument. Only items which are important to the accessory instrument configuration in the set up file are responded to when configuring for an accessory. Examples are resolution, number of scans, detector type and scan speed.

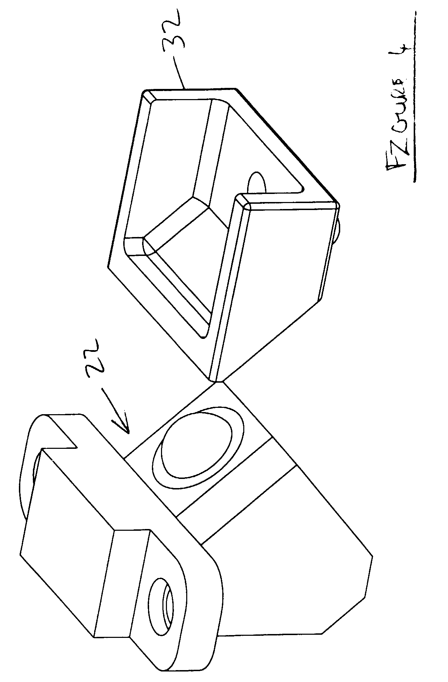

The software is designed to cause the user interface application display to update instrument parameters in scan dialogues, etc., information is displayed on Accessory Tab and this is illustrated in Figure 5, which shows a screen display for a Scan Interface.

When the sample is analysed subsequently and a measurement is performed, the instrument configuration including all accessory information is retained in the data relating to the spectral analysis so that it can be recovered at any point in the future. This means that any measurement data can be reviewed some time after the measurement and the measurement conditions for that particular analysis can be easily identified. This is a significant advantage of the present arrangement.

## Claims

1. A spectrometer having a housing, a sample station, a source of analysing radiation for directing analysing radiation towards a sample in the sample station, a receiver for receiving radiation from the sample and processing means for processing signals from the receiver to provide data relating to the analysed sample, wherein the sample station is designed to receive one of a number of accessories and each accessory includes a data storage medium which stores data indicative of said accessory, whereby on insertion of said accessory in the sample station said processing means can access said stored data and respond thereto to cause the spectrometer to configure itself and the accessory in a manner appropriate to that accessory.

2. A spectrometer according to claim 1, wherein each accessory includes a baseplate which is standard to all accessories.

3. A spectrometer according to claim 2, wherein said baseplate carries an electrical connector which, when said baseplate is located in the sample station, mates with a corresponding connector carried by the spectrometer housing.

4. A spectrometer according to any preceding claim, wherein said housing carries switch means which is actuated on insertion of an accessory into said sample station, software operated by said spectrometer processor being arranged to periodically poll the condition of said switch means to thereby recognise the presence of an accessory.

5. A spectrometer according to any one of claims 2 to 4, wherein said sample station includes support members for supporting said baseplate.

6. A spectrometer according to any one of claims 2 to 5, wherein said plate carries catch means engageable with catch elements in the sample station for enabling correct location of the accessory in said station.

7. A spectrometer according to claim 6, wherein each catch means includes spring biased balls engageable in corresponding formation in said catch elements.

8. A spectrometer according to any preceding claim, including means for recording data, such as spectrometer configuration, for each measurement.
